Europäisches Patentamt

European Patent Office

Office européen des brevets

(19)

(11) EP 0 836 294 A1

(12) DEMANDE DE BREVET EUROPEEN

| | |
|---|---|
| (43) Date de publication:<br>15.04.1998 Bulletin 1998/16 | (51) Int Cl.⁶: H04L 7/04 |

(21) Numéro de dépôt: 97402345.9

(22) Date de dépôt: 06.10.1997

(84) Etats contractants désignés:
AT BE CH DE DK ES FI FR GB GR IE IT LI LU MC NL PT SE
Etats d'extension désignés:
AL LT LV RO SI

(30) Priorité: 10.10.1996 FR 9612377

(71) Demandeur: COMPAGNIE DES SIGNAUX
75116 Paris (FR)

(72) Inventeurs:
• Lamballe, Philippe
  75015 Paris (FR)
• Enderle, Christine
  92140 Clamart (FR)
• Catel, Caroline
  75003 Paris (FR)

(74) Mandataire: Chameroy, Claude et al
c/o Cabinet Malémont
42, avenue du Président Wilson
75116 Paris (FR)

(54) Système de transmission et procédé de détection de changement de phase pour un tel système

(57) L'invention concerne un système de transmission dans lequel il prévu d'émettre un signal de conditionnement de l'émetteur vers le récepteur notamment lors du démarrage de la transmission.

Elle s'applique notamment aux recommandations V29, V32, V32bis et V34 du CCITT dans lesquelles ce signal de conditionnement contient deux segments constitués respectivement d'alternances de symboles A et B, et C et D. La transition d'un segment à l'autre constitue un changement de phase qui doit être détecté afin de choisir une référence temporelle pour le récepteur.

Pour cela, l'invention consiste à évaluer la similitude entre les N derniers symboles délivrés en sortie de l'égaliseur et une séquence de N symboles constitués d'une alternance des premier et second symboles dudit premier segment, et à observer l'évolution au cours du temps de cette évaluation, ladite séquence commençant alternativement par ledit premier puis ledit second symbole.

FIG.3

EP 0 836 294 A1

## Description

La présente invention concerne un système de transmission par symboles comportant au moins un émetteur et un récepteur,

- ledit émetteur comportant notamment des moyens d'émission d'un signal de conditionnement qui contient un premier et un second segments constitués chacun d'alternances d'un premier et d'un second symbole, la transition dudit premier audit second segment constituant un changement de phase,
- ledit récepteur comportant notamment un égaliseur auquel est destiné ledit signal de conditionnement, et des moyens de détection dudit changement de phase.

L'invention concerne également un récepteur destiné à être utilisé dans un tel système de transmission.

L'invention concerne enfin un procédé de détection d'un changement de phase dans un signal de conditionnement pour égaliseur, ledit signal de conditionnement contenant un premier et un second segments constitués chacun d'alternances d'un premier et d'un second symbole.

L'invention s'applique notamment à des systèmes de transmission utilisant des modulations conformes aux recommandations V29, V32, V32bis, V34 définies par le CCITT. Dans la suite de la description on se reportera à titre d'exemple à la recommandation V32 du CCITT.

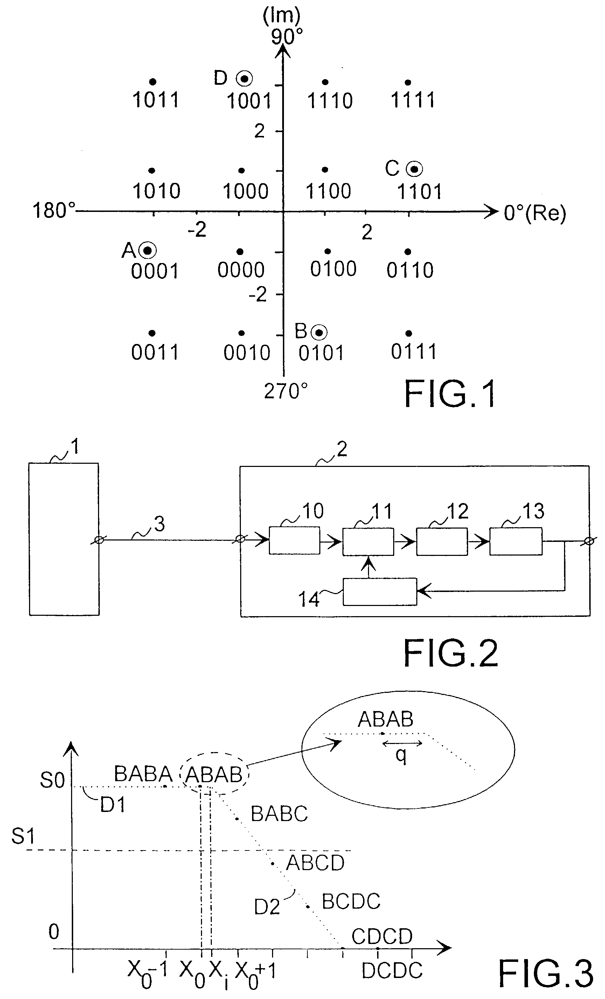

La recommandation V32 par exemple prévoit l'émission par l'émetteur d'un signal de conditionnement à l'usage du récepteur. Ce signal de conditionnement contient notamment un premier et un second segments, appelés segment 1 et segment 2 dans la recommandation V32. Le segment 1 est constitué d'une alternance de symboles A et B, tandis que le segment 2 est constitué d'une alternance de symboles C et D. Sur la figure 1 on a représenté à titre d'exemple une constellation à 16 points utilisée dans la recommandation V32 précitée, sur laquelle apparaissent les quatre symboles A, B, C et D utilisés pour ce conditionnement.

La transition d'un segment à l'autre constitue un changement de phase. La détection de ce changement de phase est utilisée pour choisir une référence temporelle pour le récepteur. De la précision de cette détection dépend la qualité du récepteur.

L'invention a pour but de proposer un mode de détection particulièrement précis.

Pour cela, un système de transmission selon l'invention et tel que défini dans le paragraphe introductif est caractérisé en ce que lesdits moyens de détection de changement de phase comportent:

- des moyens d'évaluation de la similitude entre les N derniers symboles délivrés en sortie de l'égaliseur et une séquence de N symboles constitués d'une alternance des premier et second symboles dudit premier segment,
- des moyens d'observation de l'évolution au cours du temps de cette évaluation,
- des moyens de détermination d'un instant de changement de phase en fonction de cette observation.

De même, un procédé de détection de changement de phase selon l'invention et tel que défini dans le paragraphe introductif est caractérisé en ce qu'il comporte:

- une étape d'évaluation de la similitude entre les N derniers symboles délivrés en sortie de l'égaliseur et une séquence de N symboles constitués d'une alternance des premier et second symboles dudit premier segment,
- une étape d'observation de l'évolution au cours du temps de cette évaluation,
- une étape de détermination d'un instant de changement de phase en fonction de cette observation.

Ce mode de détection présente l'avantage de ne faire intervenir l'égaliseur que sur le segment 1, c'est-à-dire sur le seul segment sur lequel il est susceptible de converger. En effet, au moment de la transition du segment 1 au segment 2, les erreurs commises sur les symboles délivrés en sortie de l'égaliseur sont importantes, ce d'autant plus que la ligne de transmission est de mauvaise qualité.

Dans un premier mode de réalisation particulièrement avantageux de la présente invention, lesdits moyens d'observation comportent des moyens de calcul de l'intersection d'une première droite D1 et d'une seconde droite D2 d'équations

$$D1: \qquad y = S_0$$

$$D2: \qquad y = -\frac{S_0}{N}.x + b$$

où:

- $S_0$ est l'évaluation obtenue lorsque les N derniers symboles délivrés en sortie de l'égaliseur et ladite séquence de N symboles sont identiques,
- b est un nombre choisi de telle sorte que ladite seconde droite passe par un point $(x_k, y_k)$, obtenu au cours de ladite transition, qui a pour abscisse un instant $x_k$ et pour ordonnée l'évaluation obtenue à cet instant $x_k$.

Ce mode de réalisation présente notamment l'avantage de permettre d'utiliser n'importe quel point $(x_k, y_k)$ de la transition sans incidence sur la fiabilité du résultat obtenu. L'intersection entre les première et seconde droites étant quelconque, ce mode de réalisation permet d'obtenir une précision à un symbole près.

Dans un second mode de réalisation de l'invention, lesdits moyens de calcul comportent des moyens pour choisir le nombre b de façon à minimiser la distance des points $(x_k, y_k)$ obtenus au cours de ladite transition avec ladite seconde droite.

Ce second mode de réalisation permet d'augmenter la précision de la détection en utilisant les N symboles de la transition au lieu d'un seul symbole quelconque.

Enfin dans un troisième mode de réalisation de la présente invention, ledit récepteur comporte:

- des moyens pour calculer la distance entre le point d'intersection obtenu et le symbole délivré en sortie de l'égaliseur qui est le plus proche de ladite intersection,
- des moyens pour recaler ledit égaliseur en tenant compte de ladite distance.

Lorsque chaque symbole correspond à K échantillons du signal (c'est-à-dire lorsque la fréquence d'échantillonnage est égale à K fois la fréquence baud), ce mode de réalisation permet de décaler la référence de l'égaliseur d'un multiple de 1/K. Le changement de phase est alors détecté à 1/K symbole près.

L'invention sera mieux comprise et d'autres détails apparaîtront à la lumière de la description qui va suivre en regard des dessins annexés qui sont donnés à titre d'exemples non limitatifs et dans lesquels:

- la figure 1 représente une constellation à 16 points utilisée dans la recommandation V32 précitée,
- la figure 2 représente un exemple de système de transmission selon l'invention,
- les figures 3 et 4 sont des courbes donnant les évaluations obtenues en fonction du temps pour N=4 d'une part, et pour N=8 d'autre part,
- la figure 5 représente un procédé selon l'invention.

Sur la figure 1 on a représenté à titre d'exemple une constellation à 16 points utilisée dans la recommandation V32 précitée, sur laquelle apparaissent les quatre symboles A, B, C et D utilisés pour le conditionnement.

D'après la figure 2, un système de transmission selon l'invention comporte un émetteur 1 et un récepteur 2, reliés par une ligne 3. Dans cet exemple, l'émetteur 1 et le récepteur 2 sont des modems. On a représenté de façon plus détaillée le récepteur 2. Il comporte, connectés en série, un filtre de réception 10, un égaliseur 11 qui délivre les coordonnées du symbole reçu, un démodulateur 12 qui remodule le signal en bande de base, et un discriminateur 13 qui choisit le point le plus probable. La sortie du discriminateur 13 est reliée à un dispositif de calcul d'erreur 14 qui calcule l'erreur commise par l'égaliseur 11 de façon à en adapter les coefficients.

Le système de transmission décrit par la suite est conforme à la recommandation V32 du CCITT.

Comme cela a déjà été dit, cette recommandation prévoit l'émission par l'émetteur d'un signal de conditionnement à l'usage du récepteur. Ce signal de conditionnement contient notamment un premier et un second segments, appelés segment 1 et segment 2, qui sont respectivement constitués d'une alternance de symboles A et B, et d'une alternance de symboles C et D. La transition du segment 1 au segment 2 constitue un changement de phase qui doit être détecté par le récepteur pour choisir une référence temporelle.

Conformément à l'invention, cette détection se fait en évaluant la similitude entre les N derniers symboles délivrés en sortie de l'égaliseur et une séquence de N symboles constituée d'une alternance des symboles A et B dudit premier segment, et en observant l'évolution au cours du temps de cette évaluation, ladite séquence commençant alors alternativement par le symbole A puis par le symbole B.

Dans la pratique, cette évaluation se fait par exemple en calculant alternativement l'intercorrélation des N dernières sorties de l'égalisateur 11 avec N symboles AB...AB puis BA...BA.

Sur la figure 3 on a représenté le résultat de cette intercorrélation lorsque N=4. La droite D1 d'équation D1: $y=S_0$ correspond à l'intercorrélation des quatre symboles ABAB ou BABA avec eux-même, c'est-à-dire à la réception du segment 1. La valeur $S_0$ est parfaitement déterminée. Elle reste constante quelque soit la ligne utilisée, le niveau du signal et le niveau du bruit. Lors de la transition entre le segment 1 et le segment 2, l'intercorrélation passe de cette valeur $S_0$ à une valeur beaucoup plus faible, proche de zéro en moyenne. Les N résultats d'intercorrélation obtenus au cours de la transition (pour les séquences ABAB, BABC, ABCD, et BCDC) se trouvent sur une droite D2 d'équation D2: $y = -(S_0/N).x + b$.

Dans un premier mode de réalisation particulièrement simple, on définit un seuil de détection de changement de phase $S_1$, compris entre 0 et $S_0$. Le changement de phase est détecté lorsque le résultat d'intercorrélation franchit ce seuil $S_1$. Une telle détection est précise à N symboles près.

Dans un autre mode de réalisation plus précis, l'instant $x_0$ du changement de phase est déterminé à partir de l'intersection des droites D1 et D2. Cette méthode permet d'obtenir une détection du changement de phase précise à un symbole près, puisque le nombre obtenu en calculant l'intersection des droites D1 et D2 ne correspond pas forcément à la réception d'un symbole. Dans la pratique on choisit comme instant de changement de phase $x_0$ l'instant le plus proche de l'instant $x_i$ donné par l'intersection des deux droites D1 et D2, qui correspond à la réception d'un symbole (sur la figure 3 on a représenté le décalage q entre les instants $x_i$ et $x_0$).

Le nombre b qui apparaît dans l'équation de la droite D2 est susceptible d'être choisi en fonction de différents critères.

Dans une première variante, on choisit $b = y_k + (S_0/N).x_k$ où le point $(x_k, y_k)$ est un point quelconque choisi pendant la transition.

Dans une seconde variante, on choisit le nombre b de façon à minimiser, par un critère des moindres carrés par exemple, la distance de tous les points $A_k(x_k, y_k)$ de la transition à cette droite D2 d'équation $y = ax + b$. Ce nombre b est donné par l'expression (1) qui est obtenue en calculant les $d_k$ distances des points $A_k$ à la droite D2 puis en dérivant par rapport à b la somme de ces N distances $d_k$. Le nombre b est celui qui annule cette dérivée.

$$b = \frac{1+a^2}{N(4a^4 + 5a^2 + 1)} \sum_{k=1}^{N} (a\, x_k - y_k) \qquad (1)$$

Le facteur $[1+a^2]/[N.(4a^4+5a^2+1)]$ est calculé une seule fois. Pour déterminer b il reste alors à effectuer 2N+1 additions et 2 multiplications.

Cette seconde variante utilise les N points de la transition pour choisir le nombre b ce qui permet d'augmenter la précision du résultat.

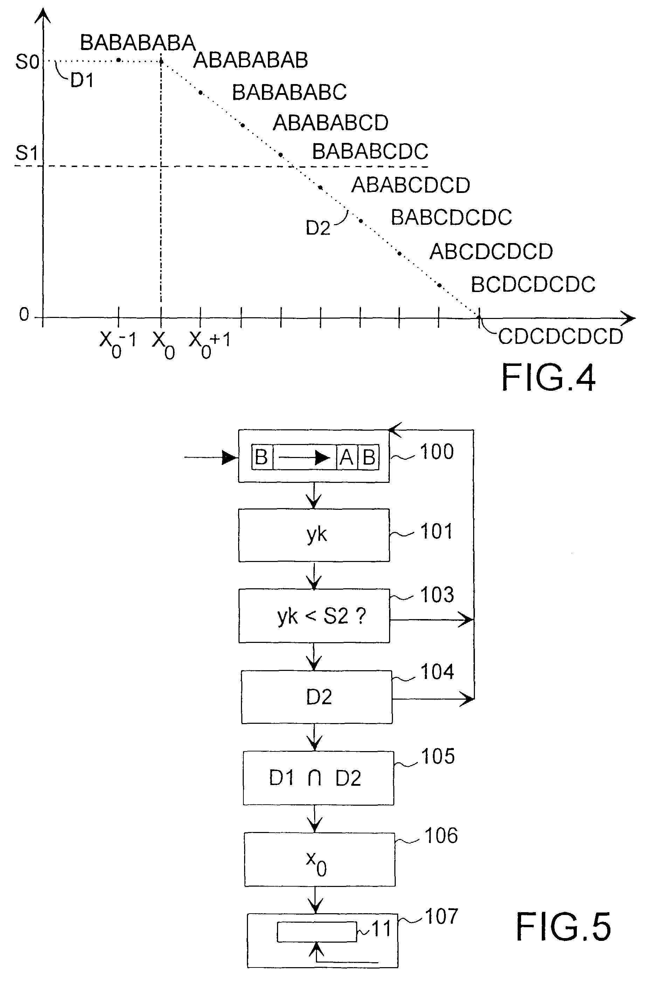

Sur la figure 4 on a représenté un autre exemple de mise en oeuvre de l'invention, avec N=8. Huit résultats d'intercorrélation sont alors obtenus au cours de la transition, pour les séquences ABABABAB, BABABABC, ABABABCD, BABABCDC, ABABCDCD, BABCDCDC, ABCDCDCD, et BCDCDCDC respectivement. Ces résultats se trouvent sur la droite D2 d'équation D2: $y = -(S_0/N).x + b$.

Dans un autre mode de réalisation de l'invention, on utilise le décalage q entre l'instant $x_0$ qui a été retenu pour le changement de phase et l'instant $x_i$ donné par l'intersection des deux droites D1 et D2 pour recaler la référence de temps de l'égaliseur. Dans le cas où chaque symbole correspond à K échantillons, la référence de l'égaliseur est susceptible d'être décalée de j/K symboles de telle sorte que la précision de la détection de changement de phase devient de 1/K symboles.

Sur la figure 5 on a résumé les différentes étapes d'un procédé de détection de changement de phase selon l'invention.

A chaque réception de symbole (instant $x_k$) le procédé est mis en oeuvre à l'étape 100. Le symbole reçu est stocké dans une mémoire de type FIFO par exemple qui contient N emplacements. A l'étape 101, on calcule l'intercorrélation ($y_k$) entre la séquence de symboles contenue dans ladite mémoire et les séquences AB...AB et BA...BA alternativement. A l'étape 103 on compare l'intercorrélation $y_k$ à un seuil $S_2$ pour déterminer si le changement de phase a ou non eu lieu. Si $y_k$ est inférieur à $S_2$, le changement de phase a eu lieu, mais il existe une incertitude de plusieurs symboles sur l'instant auquel il a eu lieu. Le procédé selon l'invention se poursuit alors à l'étape 104 où l'on calcule une équation de la droite D2 à partir des valeurs $S_0$ et N qui sont connues, et de ces coordonnées $(x_k, y_k)$. Puis, à l'étape 105, on calcule l'intersection des droites D1 et D2. On détermine ensuite à l'étape 106 l'instant $x_0$ de changement de phase, puis on ajuste, à l'étape 107, la référence temporelle de l'égaliseur.

Si en revanche, à l'étape 103, le résultat de la comparaison est que $y_k$ est supérieur à S2, le changement de phase n'a pas encore eu lieu, et on reprend le procédé à l'étape 100.

Des modifications peuvent être apportées au mode de réalisation qui vient d'être décrit notamment par substitution de moyens techniques équivalents sans que l'on sorte du domaine de la présente invention.

**Revendications**

1. Système de transmission par symboles comportant au moins un émetteur et un récepteur,

- ledit émetteur comportant notamment des moyens d'émission d'un signal de conditionnement qui contient un premier et un second segments constitués chacun d'alternances d'un premier et d'un second symbole, la transition dudit premier audit second segment constituant un changement de phase,
- ledit récepteur comportant notamment un égaliseur auquel est destiné ledit signal de conditionnement, et des moyens de détection dudit changement de phase,

caractérisé en ce que lesdits moyens de détection de changement de phase comportent:

- des moyens d'évaluation de la similitude entre les N derniers symboles délivrés en sortie de l'égaliseur et une séquence de N symboles constitués d'une alternance des premier et second symboles dudit premier segment,
- des moyens d'observation de l'évolution au cours du temps de cette évaluation,
- des moyens de détermination d'un instant de changement de phase en fonction de cette observation.

2. Système de transmission selon la revendication 1, caractérisé en ce que lesdits moyens d'observation comportent des moyens de comparaison desdites évaluations à un seuil prédéterminé de détection de changement de phase.

3. Système de transmission selon la revendication 1, caractérisé en ce que lesdits moyens d'observation comportent des moyens de calcul de l'intersection d'une première droite D1 et d'une seconde droite D2 d'équations

$$D1: \qquad y = S_0$$

$$D2: \qquad y = -\frac{S_0}{N} \cdot x + b$$

où:

- $S_0$ est l'évaluation obtenu lorsque les N derniers symboles délivrés en sortie de l'égaliseur et ladite séquence de N symboles sont identiques,
- b est un nombre choisi de telle sorte que ladite seconde droite passe par un point $(x_k, y_k)$, obtenu au cours de ladite transition, qui a pour abscisse un instant $x_k$ et pour ordonnée l'évaluation obtenue à cet instant $x_k$.

4. Système de transmission selon la revendication 3, caractérisé en ce que lesdits moyens de calcul comportent des moyens pour choisir le nombre b de façon à minimiser la distance des points $(x_k, y_k)$ obtenus au cours de ladite transition avec ladite seconde droite.

5. Système selon l'une des revendications 3 ou 4, caractérisé en ce que ledit récepteur comporte:

- des moyens pour calculer la distance entre le point d'intersection obtenu et le symbole délivré en sortie de l'égaliseur qui est le plus proche de ladite intersection,
- des moyens pour recaler ledit égaliseur en tenant compte de cette distance.

6. Récepteur destiné à être utilisé dans un système de transmission selon l'une des revendication 1 à 5.

7. Procédé de détection d'un changement de phase dans un signal de conditionnement pour égaliseur, ledit signal de conditionnement contenant un premier et un second segments constitués chacun d'alternances d'un premier et d'un second symbole, caractérisé en ce qu'il comporte:

- une étape d'évaluation de la similitude entre les N derniers symboles délivrés en sortie de l'égaliseur et une séquence de N symboles constitués d'une alternance des premier et second symboles dudit premier segment,
- une étape d'observation de l'évolution au cours du temps de cette évaluation,
- une étape de détermination d'un instant de changement de phase en fonction de cette observation.

8. Procédé selon la revendication 7, caractérisé en ce que ladite étape d'observation comporte une étape de calcul de l'intersection d'une première et d'une seconde droite d'équations

$$D1: \qquad y = S_0$$

$$D2: \qquad y = -\frac{S_0}{N} \cdot x + b$$

où:

- $S_0$ est l'évaluation obtenu lorsque les N derniers symboles délivrés en sortie de l'égaliseur et ladite séquence de N symboles sont identiques,
- b est un nombre choisi de telle sorte que ladite seconde droite passe par un point $(x_k, y_k)$, obtenu au cours de ladite transition, qui a pour abscisse un instant donné $x_k$ et pour ordonnée l'évaluation obtenu à cet instant $x_k$.

9. Procédé selon l'une des revendications 7 ou 8, caractérisé en ce que ladite étape de calcul comporte une étape de choix du nombre b de façon à minimiser la distance des points $(x_k, y_k)$ obtenus au cours de ladite transition avec ladite seconde droite.

10. Procédé selon l'une des revendications 7 à 9, caractérisé en ce qu'il comporte une étape de calcul de la distance obtenue entre le point d'intersection obtenu et le symbole délivré en sortie de l'égaliseur qui est le plus proche de ladite intersection,

- une étape de recalage dudit égaliseur en tenant compte de cette distance.

FIG.1

FIG.2

FIG.3

FIG.4

FIG.5

**Office européen des brevets**

# RAPPORT DE RECHERCHE EUROPEENNE

Numéro de la demande

EP 97 40 2345

## DOCUMENTS CONSIDERES COMME PERTINENTS

| Catégorie | Citation du document avec indication, en cas de besoin. des parties pertinentes | Revendication concernée | CLASSEMENT DE LA DEMANDE (Int.Cl.6) |
|---|---|---|---|
| X | WO 86 05052 A (SCIENTIFIC ATLANTA) 28 août 1986<br>* résumé *<br>* page 3, ligne 4 – page 4, ligne 5 *<br>* page 4, ligne 17 – page 5, ligne 5 * | 1,2,6,7 | H04L7/04 |
| A | * page 6, ligne 14 – page 10, ligne 12 *<br>--- | 3,8-10 | |
| A | FR 2 724 513 A (PHILIPS ELECTRONIQUE LAB) 15 mars 1996<br>* résumé *<br>* page 3, ligne 18 – page 5, ligne 33 *<br>--- | 1,7 | |
| A | SCHAUB T ET AL: "FRAME SYNCHRONIZATION FOR SPONTANEOUS TRANSMISSIONS" COMMUNICATIONS: CONNECTING THE FUTURE, SAN DIEGO, DEC. 2– 5, 1990,<br>vol. 1 OF 3, 2 décembre 1990, INSTITUTE OF ELECTRICAL AND ELECTRONICS ENGINEERS, pages 617-622, XP000218800<br>* page 617, colonne 1, ligne 1 – page 619, colonne 1, ligne 7 *<br>----- | 1,7 | |

DOMAINES TECHNIQUES RECHERCHES (Int.Cl.6)

H04J
H04L

Le présent rapport a été établi pour toutes les revendications

| Lieu de la recherche | Date d'achèvement de la recherche | Examinateur |
|---|---|---|
| LA HAYE | 12 décembre 1997 | Chauvet, C |

EPO FORM 1503 03.82 (P04C02)